(19) Europäisches Patentamt
European Patent Office
Office européen des brevets

(11) **EP 0 695 101 B1**

(12) **EUROPEAN PATENT SPECIFICATION**

(45) Date of publication and mention
of the grant of the patent:
**19.04.2006 Bulletin 2006/16**

(21) Application number: **95907825.4**

(22) Date of filing: **02.02.1995**

(51) Int Cl.:
*H04Q 7/10* (2006.01)    *H04Q 7/14* (2006.01)

(86) International application number:
**PCT/JP1995/000134**

(87) International publication number:
**WO 1995/021507 (10.08.1995 Gazette 1995/34)**

(54) **MOBILE RADIO COMMUNICATION SYSTEM AND RADIO RECEIVER**

MOBILES FUNKKOMMUNIKATIONSSYSTEM UND FUNKEMPFÄNGER

SYSTEME MOBILE DE RADIOCOMMUNICATION ET RECEPTEUR RADIO

(84) Designated Contracting States:
**DE FR GB IT SE**

(30) Priority: **03.02.1994 JP 1190194**

(43) Date of publication of application:
**31.01.1996 Bulletin 1996/05**

(73) Proprietor: **NTT DoCoMo, Inc.**
**Tokyo 100-6150 (JP)**

(72) Inventors:
• **ITO, Shogo**
**Yokohama-shi**
**Kanagawa 235 (JP)**
• **YAMAO, Yasushi**
**Kanagawa 238 (JP)**
• **OHKUBO, Shinzo**
**Saitama 359 (JP)**

(74) Representative: **Skone James, Robert Edmund**
**Gill Jennings & Every LLP**
**Broadgate House**
**7 Eldon Street**
**London EC2M 7LH (GB)**

(56) References cited:
**EP-A- 0 639 898**        **JP-A- 2 044 821**
**US-A- 5 150 110**

• **PATENT ABSTRACTS OF JAPAN vol. 014, no. 205
(E-0921), 26 April 1990 -& JP 02 044821 A (NIPPON
TELEGR & TELEPH CORP), 14 February 1990**

## Description

## Technical Field

This invention is utilized for calling radio receivers, and relates in particular to a mobile communications system which repeatedly transmits a signal for selectively calling a receiver, and to said receiver.

Although techniques for selectively calling a mobile unit are general to mobile communications, the explanations given hereinafter will, for the sake of simplicity, and by way of example, deal with selective radio paging systems that employ receive-only mobile units.

## Background technology

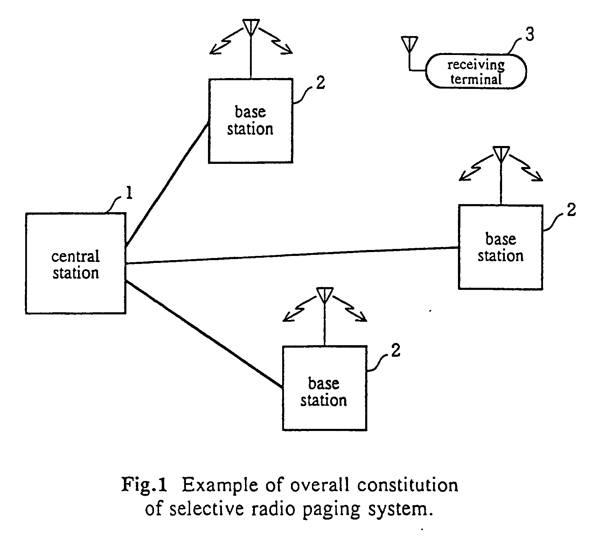

**Fig. 1** shows an example of the overall constitution of a selective radio paging system. This system has central station 1 and a plurality of base stations 2; and a paging signal sequence is transmitted from central station 1 to base stations 2 via links, with these base stations 2 transmitting said paging signal sequence through the air by radio waves. Receiving terminal 3 in the service area receives the paging signal sequence that has been transmitted from base stations 2, and performs paging operations when there is a paging signal addressed to it.

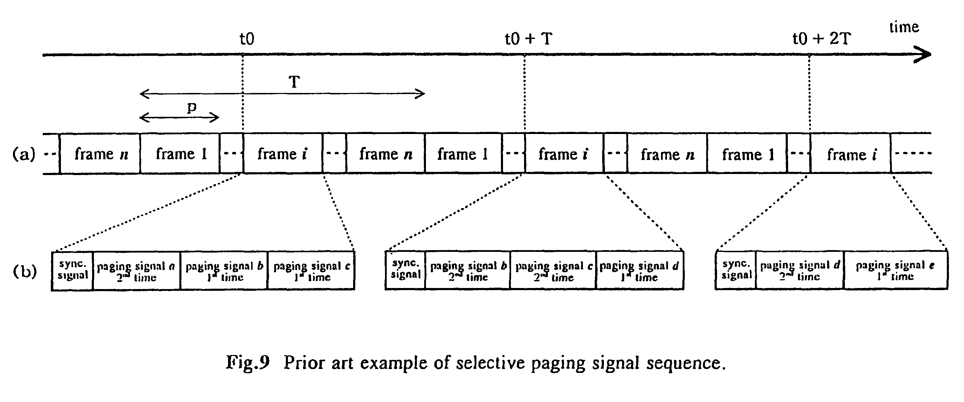

**Fig 9** shows a conventional selective paging sequence which base stations 2 transmit. The explanation given here will deal with the case where an identical selective paging signal is transmitted twice. As shown in **Fig. 9(a),** the paging signal sequence comprises a series of superframes of period $T,$ each comprising $n$ frames of signal length $p$ joined together. As shown in **Fig. 9(b),** the signal corresponding to each frame comprises a synchronization signal and a series of paging signals. The sequences with period T are sometimes called "frames" and the sequences comprising a synchronization signal plus a series of paging signals are sometimes called "subframes". The receiving terminals are divided into $n$ groups, and a receiving terminal belonging to group $i$ $(1 \le i \le n)$ becomes capable of receiving only during a frame $i$ reception time, whereupon it receives the paging signals in that frame. When the received signal is a paging signal for the receiving terminal in question, that receiving terminal performs paging operations. A system whereby a receiving terminal becomes capable of receiving only during the frame reception time allotted to said terminal is called an "intermittent receiving system", and achieves an extension of battery life.

Now, transmission quality in mobile communications will deteriorate due to fading and the like. In a selective radio paging system, therefore, identical paging signals are transmitted a plurality of times. **Fig. 9(b)** shows frames transmitted to receiving terminals belonging to group $i,$ for the case where identical paging signals are transmitted twice. In frame $i$ transmitted at time $t0,$ the synchronization signal is followed by transmission of paging signal $a$ for the second time and paging signals $b$ and $c$ for the first time. At time $t0+T,$ which is the next transmission time, the synchronization signal is followed by transmission of paging signals $b$ and $c$ for the second time and paging signal $d$ for the first time. At time $t0+2T,$ which is the next transmission time, the synchronization signal is followed by transmission of paging signal $d$ for the second time and paging signal $e$ for the first time.

If identical paging signals are thus transmitted a plurality of times at the transmitting side, any of these paging signals could be received correctly at the receiving side, and consequently there is an increased probability that a given paging signal will be correctly received. Letting the probability of not correctly receiving a paging signal when it is transmitted once be $Pe,$ the probability of not correctly receiving it when it is transmitted $n$ times will be $Pe^n$ (and the probability of correctly receiving it is $1-Pe^n$). It will therefore be seen that the probability of correctly receiving increases with increasing number of transmissions. This is explained in detail in, for example, **"Fundamentals of Mobile Communications",** ed. Okumura, Y. and Shinji, M., pp. 118-120, pub. IECE Japan (first edition published 1 October 1986).

The probability of correctly receiving is further increased by time diversity reception, at the receiving side, of identical paging signals that have been transmitted a plurality of times. One time diversity method involves using the detector output for each bit as taught in Hirai, Y., Nozawa, T. and Itō, S., **"BER performance with thime diversity reception in digital FM mobile radio",** Proceedings of the 1993 Spring Conference of the IEICE Japan, B-330; and in Jap. Pat. Appl. No. 5-117216 and PCT/JP94/00400 which is based on this Japanese application. According to this method, because the error rate of the bits that comprise a given paging signal is improved every time said signal is received, the probability of not correctly receiving a given paging signal by time diversity reception when said signal is transmitted twice will be:

$$Pe(1) \times Pe(2)$$

where $Pe(1)$ $(Pe(1)=Pe)$ is the probability of not correctly receiving a paging signal transmitted once and $Pe(2)$ $(Pe(2)<Pe(1))$ is the probability of not correctly receiving a paging signal transmitted twice. Likewise, the probability of not correctly receiving a given paging signal by time diversity reception when said signal is transmitted $n$ times will be:

$$Pe(1) \times Pe(2) \times ... \times Pe(n)$$

[where $Pe(1)>Pe(2)>...Pe(n)$]

It will therefore be seen that with time diversity reception, an increase in the number of times that transmission is carried out results in the probability of correctly receiving increasing more than in the ordinary method described above.

The preferential transmission, from among data transmitted a plurality of times, of those with a high degree of importance is taught in Jpn. Pat. Appl. Kōkai No. 1-174026 as a modification of the technique of transmitting an identical paging signal a plurality of times. Jpn. Pat. Appl, Kökai No. 2-44821 teaches transmitting after adding to the paging signal information relating to how many times paging has been carried out. Furthermore, PCT/JP94/00107 teaches constituting frames from a plurality of fixed-length subframes; inserting a new paging signal at one end within the frame (for example, in the leading subframe); and inserting a paging signal that is to be transmitted for the second or subsequent time in a subframe arranged at a position corresponding to said number of times.

US 5150110 discloses a selective call communication system with remotely generated repeat messages in which information is transmitted and retransmitted a number of times. The receivers may delete duplicate copies ofinformation and may also send an acknowledgement to the transmitter once the information has been received.

Nevertheless, the number oftimes that identical paging signals are transmitted has hitherto been predetermined, and this has resulted in a lack of operating flexibility. For example, despite the number of customers per service area being high in densely populated regions such as metropolitan areas, and low in sparsely populated regions such as provincial areas, the number of times a paging signal is transmitted has been fixed and the service area per base station facility has been approximately constant. As a result, even regions which are not so densely populated have had the same deployment of base station facilities as the densely populated regions. It follows that in such regions the investment in equipment per customer will inevitably be high.

It is an object of the present invention to overcome this problem, and to provide a mobile communications system and a radio receiver such that equipment investment does not increase even when there are few customers per service area.

**Disclosure of the Invention**

A mobile communications system comprises a transmitting means which transmits paging signals a plurality of times through the air by radio waves, said paging signals serving to selectively page radio receivers, the transmitting means including: a means which transmits in units of frames, said frames comprising one or more paging signals to which a control signal has been added; a means which inserts, in the aforementioned control signal, information relating to the number of transmissions; and a means which transmits information relating to the number of times that paging signals are transmitted,

characterised in that the system further comprises a means which variably sets the number of times that paging signals are transmitted from the aforementioned transmitting means.

As well as variably setting, at the transmitting side, the number of times that paging signals are transmitted, it is desirable to variably set, at the receiving side, the number of times that paging signals will be received. In accordance with a second aspect of the invention, a radio receiver comprises a receiver part for receiving frames comprising one or more paging signals, each of which is transmitted a number of times in successive frames, and a control signal including information relating to the number of transmissions of the paging signals; and a decoder for detecting said information relating to the number of transmissions of the paging signals included in said control signal in the received frame; characterised in that: the number of transmissions of the paging signals is set variably for each frame; and said decoder further comprises a means for setting the number of receptions of the paging signals to be equal to the number of transmissions included in said control signal, comparing the number of times that each paging signal has been received with said number of receptions and proceeding to process the paging signal unless the paging signal has already been received a number of times equal to the number of receptions.

In order to transmit information relating to the number of transmissions, the method disclosed in Jpn. Pat. Appl. Kökai No. 2-44821 can be utilized after modification. Namely, instead of transmitting after adding information relating to how many times the paging signals in the frame in question will be transmitted, transmitting is carried out after adding information relating to how many times its paging signals will subsequently be transmitted, and the initial value of a countdown is changed accompanying a change in the number oftransmissions. By proceeding in this way, the number of times each paging signal will subsequently be sent can be recognised at a radio receiver from the received frame, and it is not essential to recognise a change in the number of transmissions.

Alternatively, it is also possible to transmit after inserting, in the control signal of a frame, information relating to the number of transmissions itself In particular, when the configuration of the signal within a frame changes accompanying a change in the number of transmissions, information relating to the number of transmissions itself becomes necessary in order for there to be a correspondence with this signal configuration at the receiving side, and the method disclosed in Jpn. Pat. Appl. Kökai No. 2-44821 cannot be utilised.

The signal configuration disclosed in PCT/JP94/00107 is one in which the signal configuration within frames changes accompanying change in the number of transmissions. With this signal configuration, frames are constituted from a plurality of subframes of fixed length, and a new paging signal is inserted at one end ofthe frame (for example, in the leading subframe), while a paging signal that is to be transmitted for the second or subsequent time is inserted in a subframe arranged at a position corresponding to said number of times. Under these circumstances, if the number of transmissions is changed, the number of subframes required within a frame will change in correspondence with this. In order to make effective use of the space within a frame it is desirable to change the configuration of the subframes accompanying a change in the number of transmissions. That is to say, the transmitting side should have a means which forms *n* subframes within a frame when the number of transmissions is *n*; and said means should include: a means which inserts a new paging signal in a subframe positioned at one end of said frame, and which inserts a paging signal that is to be transmitted for the second or subsequent time in a subframe arranged at a position corresponding to the number of times in question; and a means which changes the number and length of subframes within a frame when the setting means changes the number of transmissions *n.* Under these circumstances, the radio receiver should have: a means which detects, from the control signal of the received frame, information relating to the number of transmissions; and a means which decides the subframe configuration of said received frame from the detected information relating to the number of transmissions.

If matters are arranged so that the number of transmissions of paging signals can be set variably, regions in which the population is not so densely crowded can have the service area per base station enlarged by making the number of transmissions of identical paging signals greater than in densely populated regions. In densely populated regions as well, when there is little traffic (e.g., during the night), if the number of transmissions of identical paging signals is made greater than at ordinary times, a service with high quality transmission of paging signals can be achieved.

**Brief Explanation of the Drawings**

**Fig. 1** block diagram showing an example ofthe overall constitution of a selective radio paging system.
**Fig. 2** embodiment of the selective paging signal sequence transmitted by base stations.
**Fig. 3** flowchart of the operation of frame formation by the central station.
**Fig. 4** block diagram showing an example of a radio receiver used as a receiving terminal.
**Fig. 5** flowchart of the control of receiving processing by the decoder.
**Fig. 6** another embodiment of the selective paging signal sequence transmitted by base stations.
**Fig. 7** flowchart of the operation of frame formation by the central station.
**Fig. 8** flowchart ofthe control of receiving processing by the decoder in the radio receiver.
**Fig. 9** conventional selective paging signal sequence transmitted by base stations.

**Optimum Configuration for Embodying the Invention**

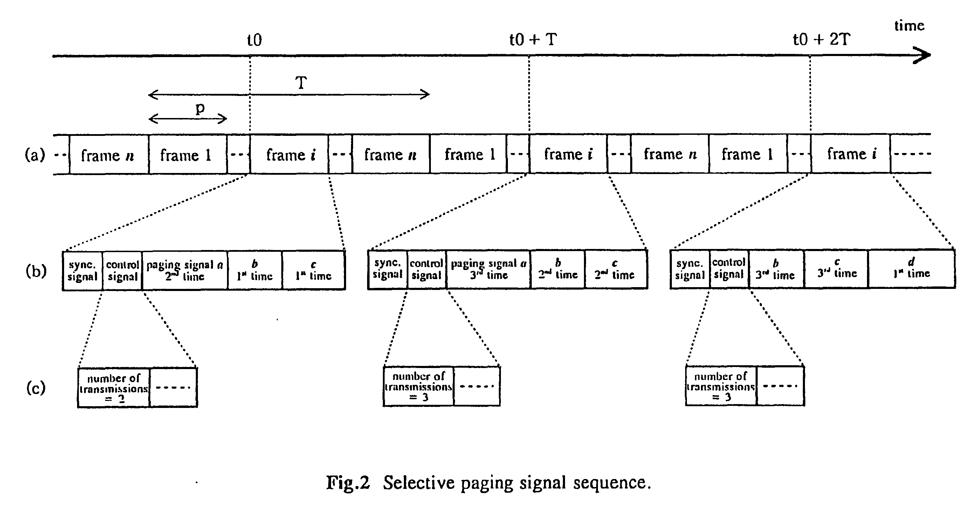

**Fig. 1** is a block diagram showing a selective radio paging system which embodies this invention, and **Fig. 2** shows an embodiment of the selective paging signal sequence transmitted by the base stations. This selective radio paging system has a plurality of base stations 2 which serve as transmitting means which transmit paging signals a plurality of times through the air by radio waves, said paging signals serving to selectively page receiving terminal 3. It also has, in central station 1, a means which variably sets the number of times that paging signals are transmitted from these base stations 2.
In accordance with the paging request form the telephone network, central station 1 forms frames comprising a synchronization signal, a control signal, and a series of paging signals, and transmits these via links to base stations 2. Base stations 2 transmit these frames through the air by radio waves. The control signal in each frame contains information indicating the number of transmissions, so that the state of the receiving terminal can be changed in accordance with the transmission parameters and mode that have been specified.
As shown in **Fig. 2(a),** the paging signal sequence comprises a sequence of superframes of period *T*, each comprising *n* frames of signal length *p* joined together. This is the same as the prior art example. As shown in **Fig. 2(b),** the signal corresponding to each frame contains a control signal in addition to the synchronization signal and the series of paging signals. As shown in **Fig. 2(c),** the number of transmissions is contained in the control signal. The receiving terminals are divided into *n* groups in similar fashion to the prior art example, and a receiving terminal belonging to the group $i(1 \leq i \leq n)$ becomes capable of receiving only during a frame *i* reception time, whereupon it receives the paging signals in that frame. When the received signal is a paging signal for a given receiving terminal, that receiving terminal performs paging operations.
The operation of transmitting paging signals to a receiving terminal belonging to group *i* will be explained with reference to **Fig. 2,** which illustrates the case where the number of transmissions has been changed from two to three. In frame *i* transmitted at time *t0,* the synchronization signal is followed by transmission of a control signal indicating the number of transmissions is 2, and then by transmission of paging signal *a* for the second time, paging signal *b* for the first time, and paging signal *c* for the first time. It will be supposed that the number of transmissions has changed from 2 to 3. Accordingly, at time *t0+T,* which is the next transmission time, the synchronization signal is followed by transmission of a control signal indicating that the number of transmissions is 3, and then by transmission of paging signal *a* for the third time, paging signal *b* for the second time, and paging signal *c* for the second time. At time *t0+2T,* the synchronization signal is followed by transmission of a control signal indicating that the number of transmissions is 3, and then by transmission of paging signal *b* for the third time, paging signal *c* for the third time, and paging signal *d* for the first time.

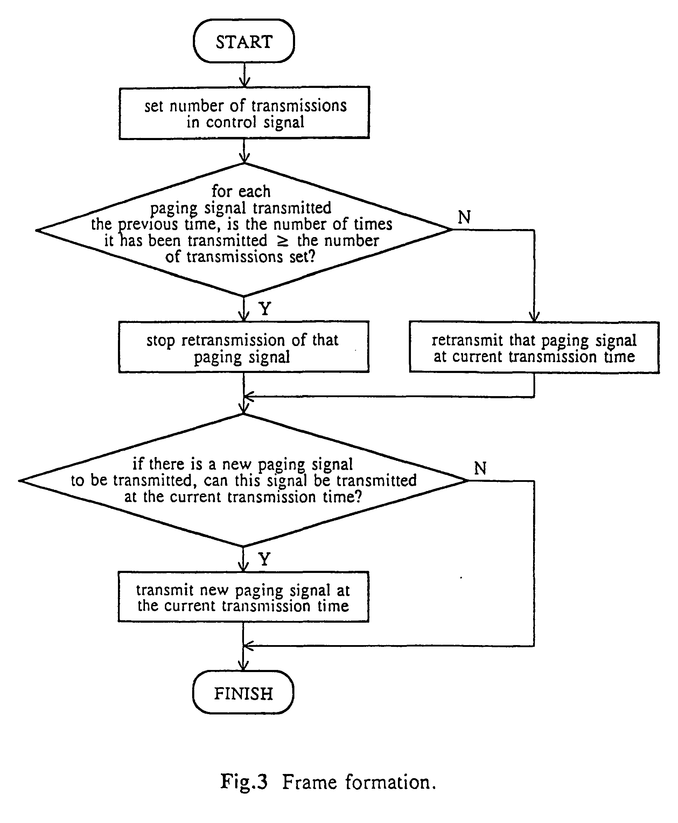

**Fig. 3** shows the flow of the operation of frame formation by central station 1. In central station 1, when the number of transmissions has been set in a control signal, a comparison is made, for each paging signal transmitted the previous time, of the number of times said paging signal has been transmitted and the number of transmissions that have been set. When the number of times a paging signal has been transmitted is equal to or greater than the number of transmissions that have been set, retransmission of that paging signal is stopped. When the number of times a paging signal has been transmitted is smaller than the number of transmissions that have been set, that paging signal is retransmitted at the current transmission time. When there is a new page signal to be transmitted and this signal can be transmitted at the current transmission time, said new paging signal is transmitted at said transmission time.

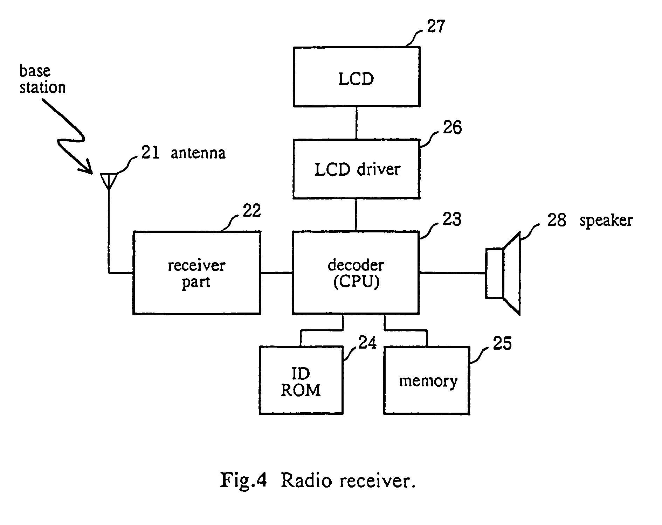

**Fig. 4** is a block diagram showing an example of a radio receiver used as a receiving terminal. This radio receiver has antenna 21, receiver part 22, decoder 23, ID ROM 24, memory 25, liquid crystal display driver 26, liquid crystal display 27, and speaker 28. Receiver part 22 receives the paging signal sequence that is input via antenna 21 and supplies the received signal to decoder 23. Decoder 23 receives a synchronization signal, performs synchronization processing, and uses the control signal, which is received next, to set the transmission parameters/mode of the receiver in question as specified by said control signal, whereupon it performs receiving processing of the subsequently received paging signals in accordance with this setting. Decoder 23 also performs the control required for the intermittent receiving, whereby receiver part 22 operates only during the times when the group to which it belongs is receiving.

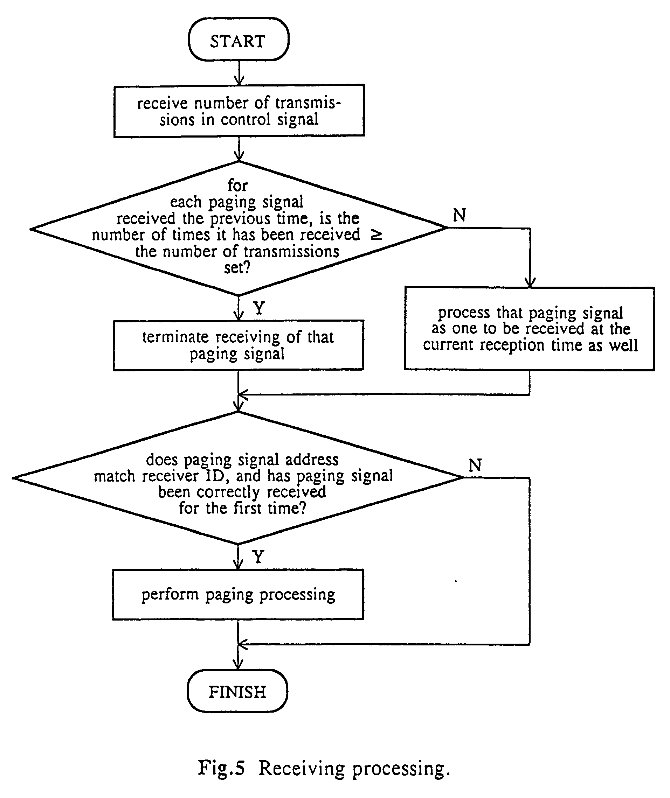

**Fig. 5** shows the flow of the control of receiving processing by decoder 23. When decoder 23 receives the number of transmissions in a control signal, it compares, for each paging signal transmitted the previous time, the number of times said paging signal has been received so far, and the received number of transmissions. When the number of receptions is equal to or greater than the number of transmissions, decoder 23 terminates the receiving processing of that paging signal. When the number of receptions is smaller than the number of transmissions, decoder 23 processes the paging signal in question as one which is to be received again at the current reception time. It also compares the address of the received paging signal with its own ID stored in ID ROM 24, and if these are in agreement and the paging signal in question has been correctly received for the first time, it causes speaker 28 to emit an alert and performs paging processing whereby the required information - such as a message - contained in the paging signal is displayed by liquid crystal display 27 via liquid crystal display driver 26.

In this example, the number of transmissions - which is one of the parameters in the control signal - changes in the subframe received at time *t0+T* to 3 from the previous setting of 2, and radio receivers belonging to group *i* change their receiving processing to match this. As a result, erroneous paging does not occur.

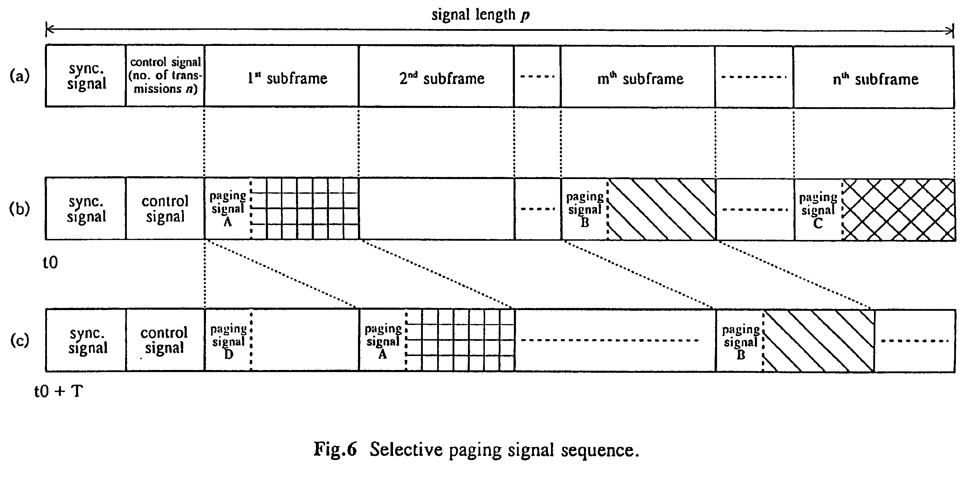

**Fig. 6** shows another example of a paging signal sequence. This signal sequence is obtained by modifying the sequence disclosed in PCT/JP94/00107 so that it conforms with the present invention. As shown in **Fig. 6(a)** each frame comprises a synchronization signal, a control signal, and a plurality of subframes. The number of transmissions *n* is inserted in the control signal. The subframes are established by dividing the region for paging signals within the frame into equal portions in accordance with the number of transmissions *n*, and each subframe is capable of transmitting a plurality of paging signals. **Fig. 6(b)** represents the time *t0* frame. Paging signals *A, B* and *C* are transmitted in the $1^{st}$, $m^{th}$, and $n^{th}$ subframes respectively, in accordance with how many time each has been transmitted. **Fig. 6(c)** represents the frame at time *t0+T* (the number of transmissions is *n* and has not changed). Because paging signal *A* will be transmitted for the second time, it is transmitted in the second subframe. Because paging signal *B* will be transmitted for the $(m+1)^{th}$ time, it is transmitted in the $(m+1)^{th}$ subframe. Because transmission of paging signal *C* for the $n^{th}$ time was completed at time *t0,* it is not transmitted at time *t0+T.* Because paging signal *D* will have its first transmission at time *t0+T,* it is transmitted in the first subframe.

It is possible for the number of subframes in a frame to be set to a fixed number equal to the maximum value of the number of transmissions *n,* whereupon only the same number of subframes as the number of transmissions *n* are used. However, when the number of transmissions *n* is smaller than the maximum value, there will be a wasted region in the frame. The number and length of subframes in the frame should therefore be changed in response to a change in the number of transmissions *n,* and the subframes should be set by dividing the region for paging signals by the changed number of transmissions *n*.

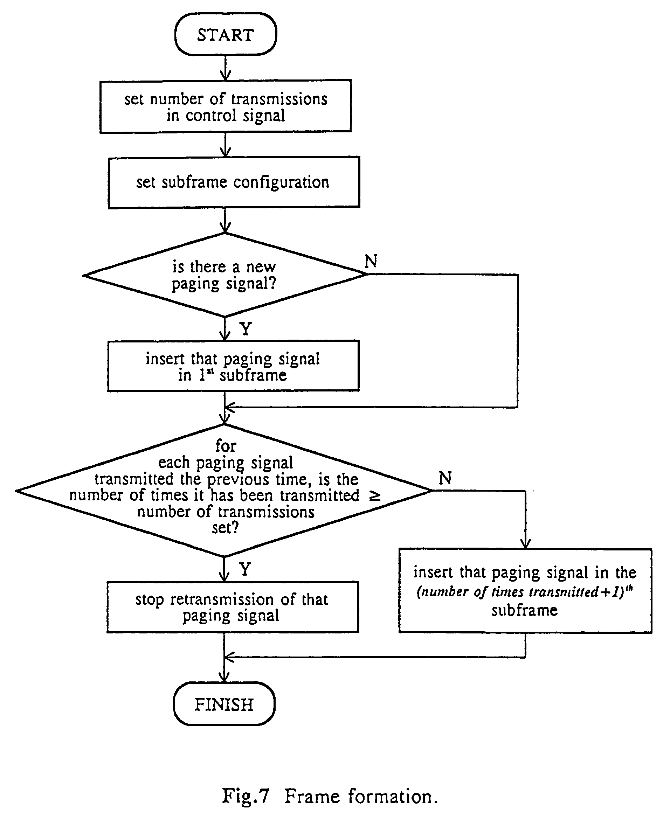

**Fig. 7** shows the flow of the operation of frame formation by central station 1 when such a paging signal sequence is used. In central station 1, when the number of transmissions has been set in a control signal, a subframe configuration - namely, the number and length of the subframes - corresponding to this number of transmissions will be set. Next, when there is a new paging signal to be transmitted, this paging signal is inserted in the first subframe. A comparison is then made, for each paging signal transmitted the previous time, of the number of times said paging signal has been transmitted and the number of transmissions that have been set. When the number of times a paging signal has been transmitted is equal to or greater than the number of transmissions that have been set, retransmitting of that paging signal is stopped. When the number of times a paging signal has been transmitted is smaller than the number of transmissions that have been set, that paging signal is inserted in the *(number of times transmitted+1)^{th}* subframe.

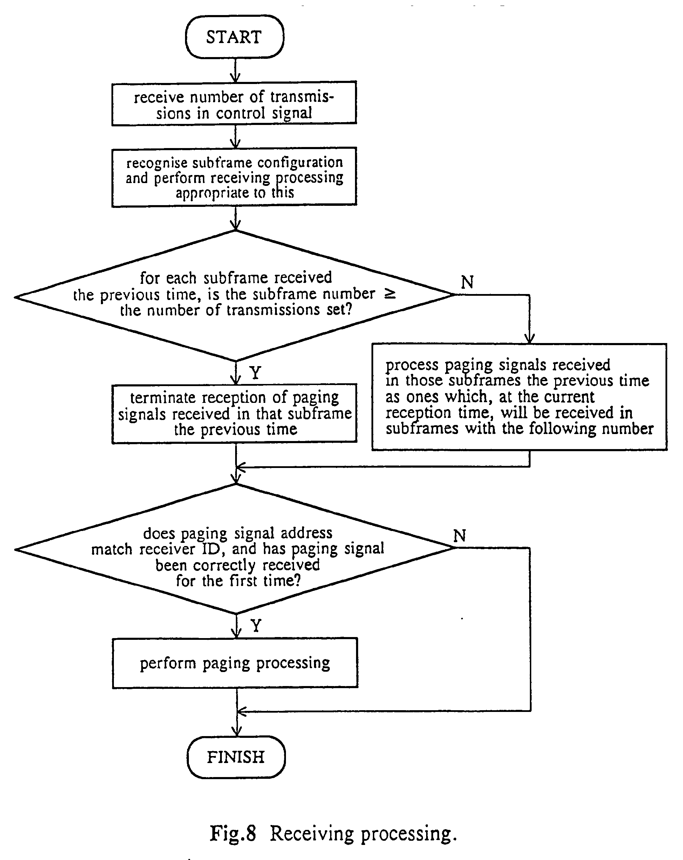

**Fig. 8** shows the flow of the control of receiving processing by decoder 23 of the radio receivers when the paging signal sequence depicted in **Fig. 6** is used. When decoder 23 receives the number of transmissions in a control signal, it recognises the subframe configuration corresponding to this number of transmissions and performs receiving processing appropriate to this. This involves performing reception termination processing on the paging signals, which were received in those subframes transmitted the previous time that had a subframe number corresponding to or greater than the number of transmissions. Paging signals received in other subframes are processed as ones which, at the current reception time, are received in subframes with the following number. Decoder 23 then compares the address of the received paging signal with its own ID stored in ID ROM 24, and if these are in agreement and the paging signal in question has been correctly received for the first time, it causes speaker 28 to emit an alert and performs paging processing whereby the required information - such as a message - contained in the paging signal is displayed by liquid crystal display 27 via liquid crystal display driver 26.

In the foregoing embodiments, information relating to the number of transmissions is transmitted in each frame as one parameter of the control signal, said control signal serving to change the state of the receiving terminal in accordance with the transmission parameters/mode that have been set. This enables the number of transmissions to be changed for each group of receivers. Information relating to number of transmissions can also be inserted in a paging signal.

Although the foregoing explanations have dealt with a selective radio paging system by way of example, this invention can similarly be applied to the calling of mobile units in cellular and other mobile communications systems.

As has now been explained, because a mobile communications system and a radio receiver according to this invention enable the number of transmissions of paging signals to be set variably, regions in which the population is not so densely crowded can have the service area per base station enlarged by the number of transmissions of identical paging signals greater than that in densely populated regions. In densely populated regions as well, when there is little traffic (e.g., during the night), if the number of transmissions of identical paging signals is made greater than at ordinary times, a service with high quality transmission of paging signals can be achieved.

**Claims**

1. Mobile communications system comprising:

   a transmitting means which transmits paging signals a plurality of times through the air by radio waves, said paging signals serving to selectively page radio receivers, the transmitting means including: a means which transmits in units of frames, said frames comprising one or more paging signals to which a control signal has been added; a means which inserts, in the aforementioned control signal, information relating to the number of transmissions; and
   a means which transmits information relating to the number of times that paging signals are transmitted,
   **characterised in that** the system further comprises a means which variably sets the number of times that paging signals are transmitted from the aforementioned transmitting means.

2. Mobile communications system as set forth in Claim 1, wherein:

   there is provided a means which forms *n* subframes within a frame when the number of transmissions is *n*; and
   this means includes: a means which inserts a new paging signal in a subframe positioned at one end of said frame, and which inserts a paging signal that is to be transmitted for the second or subsequent time in a subframe arranged at a position corresponding to this number of times; and a means which changes the number and length of subframes within a frame when the aforementioned setting means changes the number of transmissions *n*.

3. Radio receiver comprising:

   a receiver part (22) for receiving frames comprising one or more paging signals, each of which is transmitted a number of times in successive frames, and a control signal including information relating to the number of transmissions of the paging signals; and
   a decoder (23) for detecting said information relating to the number of transmissions of the paging signals included in said control signal in the received frame;
   **characterised in that**:
   the number of transmissions of the paging signals is set variably for each frame; and

said decoder (23) further comprises a means for setting the number of receptions of the paging signals to be equal to the number of transmissions included in said control signal, comparing the number of times that each paging signal has been received with said number of receptions and proceeding to process the paging signal unless the paging signal has already been received a number of times equal to the number of receptions.

4. Radio receiver as set forth in claim 3 wherein each of said frames is configured by said control signal and a plurality of subframes the number of which is determined by the number of transmissions of the paging signals; and said decoder (23) decides the subframe configuration of a received frame from the detected information relating to the number of transmissions of the paging signals and assuming the position of the received subframe to be the number of times that a paging signal has been received.

## Revendications

1. Système de communication mobile comprenant :

des moyens d'émission qui émettent des signaux de téléappel plusieurs fois dans l'air au moyen d'ondes radio, lesdits signaux de téléappel servant à réaliser le téléappel sélectif de récepteurs radio, les moyens d'émission incluant : des moyens qui réalisent une transmission sous la forme d'unités de trames, lesdites trames comprenant un ou plusieurs signaux de téléappel, auxquels un signal de commande a été ajouté; des moyens qui insèrent, dans le signal de commande mentionné précédemment, une information concernant le nombre d'émissions; et

des moyens qui émettent une information concernant le nombre de fois où des signaux de téléappel sont transmis,

**caractérisé en ce que** le système comporte en outre des moyens qui règlent d'une manière variable le nombre de fois où des signaux de téléappel sont émis par les moyens d'émission mentionnés précédemment.

2. Système de communication mobile selon la revendication 1, dans lequel :

il est prévu des moyens qui forment n sous-trames dans une trame lorsque le nombre d'émissions est n; et

ces moyens incluent : des moyens qui introduisent un nouveau signal de téléappel dans une sous-trame positionnée à une extrémité de ladite trame et qui insèrent un signal de téléappel, qui doit être émis pour la seconde fois ou la fois suivante dans une sous-trame disposée dans une position correspondant à ce nombre de fois; et

des moyens qui modifient le nombre et la longueur de sous-trames dans une trame lorsque les moyens de réglage mentionnés précédemment modifient le nombre d'émissions n.

3. Récepteur radio comprenant :

une partie formant récepteur (22) pour recevoir des trames comprenant un ou plusieurs signaux de téléappel dont chacun est émis un certain nombre de fois dans des trames successives, et un signal de commande incluant une information concernant le nombre d'émissions de signaux de téléappel; et

un décodeur (23) pour détecter ladite information concernant le nombre d'émissions des signaux de téléappel contenus dans ledit signal de commande dans la trame reçue;

**caractérisé en ce que**

le nombre d'émissions des signaux de téléappel est réglé d'une manière variable pour chaque trame; et

ledit décodeur (23) comporte en outre des moyens pour régler le nombre de réception des signaux de téléappel pour qu'il soit égal au nombre d'émissions contenu dans ledit signal de commande, comparer le nombre de fois où chaque signal de téléappel a été reçu audit nombre de réceptions et passer au traitement du signal de téléappel sauf si le signal de téléappel a déjà été reçu un certain nombre de fois égal au nombre de réceptions.

4. Récepteur radio selon la revendication 3, dans lequel chacune desdites trames est configurée au moyen dudit signal de commande et d'une pluralité de sous-trames, dont le nombre est déterminé par le nombre d'émissions de signaux de téléappel, et ledit décodeur (23) décide de la configuration de sous-trames d'une trame reçue à partir de l'information détectée associée au nombre d'émissions des signaux de téléappel et en supposant la position de la sous-trame reçue comme étant le nombre de fois où un signal de téléappel a été reçu.

## Patentansprüche

1. Mobiles Funkkommunikationssystem, das aufweist:

ein Sendemittel, das Funkrufsignale eine Vielzahl von Malen durch die Luft als Funkwellen sendet, wobei die Funkrufsignale dazu dienen, Funkempfänger selektiv anzurufen, und das Sendemittel aufweist: ein Mittel, das in Einheiten von Rahmen sendet, wobei die Rahmen ein oder mehrere Funkrufsignale aufweisen, denen ein Steuersignal zugesetzt worden ist; ein Mittel, das in das erwähnte Steuersignal eine Information einfügt, die sich auf die Anzahl der Sendungen bezieht; und

ein Mittel, das eine Information bezüglich der Anzahl von Malen sendet, die die Funkrufsignale gesendet werden,

**dadurch gekennzeichnet, daß** das System ferner ein Mittel aufweist, das die Anzahl von Malen, die die Funkrufsignale von dem erwähnten Sendemittel gesendet werden, veränderbar einstellt.

2. Mobiles Funkrufsystem nach Anspruch 1, bei dem:

ein Mittel vorgesehen ist, das in einem Rahmen n Teilrahmen bildet, wenn die Anzahl der Sendungen n ist; und

dieses Mittel aufweist: ein Mittel, das in einem Teilrahmen am Ende des Rahmens ein neues Funkrufsignal einfügt, und das ein Funkrufsignal einfügt, das zum zweiten oder nachfolgenden Mal in einem Teilrahmen zu senden ist, der an einer Stelle angeordnet ist, die dieser Anzahl von Malen entspricht; und ein Mittel, das die Anzahl und Länge der Teilrahmen in einem Rahmen ändert, wenn das erwähnte Einstellmittel die Anzahl n der Sendungen ändert.

3. Funkempfänger, der aufweist:

einen Empfangsteil (22) zum Empfangen von Rahmen, die ein oder mehrere Funkrufsignale aufweisen, von denen jedes eine Anzahl von Malen in aufeinanderfolgenden Rahmen gesendet wird, und eines Steuersignals, das eine Information bezüglich der Anzahl von Sendungen der Funkrufsignale aufweist; und

einen Dekodierer (23) zum Detektieren der Information bezüglich der Anzahl von Sendungen der Funkrufsignale, die in dem Steuersignal in dem empfangenen Rahmen enthalten sind;

**dadurch gekennzeichnet, daß**:

die Anzahl der Sendungen der Funkrufsignale für jeden Rahmen variabel eingestellt ist; und daß der Dekodierer (23) ferner ein Mittel zum Einstellen der Anzahl von Empfängen der Funkrufsignale aufweist, so daß sie gleich der Anzahl von Sendungen ist, die in dem Steuersignal enthalten ist, zum Vergleichen der Anzahl von Malen, die jedes Funkrufsignal empfangen wurde, mit der Anzahl von Empfängen und zum Fortsetzen der Verarbeitung des Funkrufsignals, sofern das Funkrufsignal bereits eine Anzahl von Malen empfangen wurde, die gleich der Anzahl von Empfängen ist.

4. Funkempfänger nach Anspruch 3, bei dem jeder Rahmen durch das Steuersignal und eine Vielzahl von Teilrahmen, deren Anzahl durch die Anzahl der Sendungen der Funkrufsignale bestimmt ist, konfiguriert ist; und daß der Dekodierer (23) über die Teilrahmenkonfiguration eines empfangenen Rahmens anhand der detektierten Information entscheidet, die sich auf die Anzahl der Sendungen der Funkrufsignale bezieht, und die Position des empfangenen Teilrahmens als die Anzahl von Malen annimmt, die ein Funkrufsignal empfangen wurde.

Fig.1 Example of overall constitution
of selective radio paging system.

Fig.2 Selective paging signal sequence.

EP 0 695 101 B1

START

set number of transmissions
in control signal

for each
paging signal transmitted
the previous time, is the number of times
it has been transmitted ≥ the number
of transmissions set?

N

Y

stop retransmission of that
paging signal

retransmit that paging signal
at current transmission time

if there is a new paging signal
to be transmitted, can this signal be transmitted
at the current transmission time?

N

Y

transmit new paging signal at
the current transmission time

FINISH

Fig.3 Frame formation.

Fig.4  Radio receiver.

START

receive number of transmis-
sions in control signal

for
each paging signal
received the previous time, is the
number of times it has been received ≥
the number of transmissions
set?

N

Y

terminate receiving of that
paging signal

process that paging signal
as one to be received at the
current reception time as well

does paging signal address
match receiver ID, and has paging signal
been correctly received
for the first time?

N

Y

perform paging processing

FINISH

Fig.5 Receiving processing.

signal length $p$

| (a) | sync. signal | control signal (no. of trans-missions $n$) | 1st subframe | 2nd subframe | · · · · · | $m^{th}$ subframe | · · · · · · · · | $n^{th}$ subframe |

(b)

sync. signal | control signal | paging signal A | ... | paging signal B | ... | paging signal C

t0

(c)

sync. signal | control signal | paging signal D | paging signal A | paging signal B

t0 + T

Fig.6 Selective paging signal sequence.

EP 0 695 101 B1

Fig.7 Frame formation.

START

receive number of transmis-
sions in control signal

recognise subframe configuration
and perform receiving processing
appropriate to this

for each subframe received
the previous time, is the subframe number ≥
the number of transmissions set?

N

process paging signals received
in those subframes the previous time
as ones which, at the current
reception time, will be received in
subframes with the following number

Y

terminate reception of paging
signals received in that subframe
the previous time

does paging signal address
match receiver ID, and has paging signal
been correctly received
for the first time?

N

Y

perform paging processing

FINISH

Fig.8 Receiving processing.

Fig.9 Prior art example of selective paging signal sequence.

EP 0 695 101 B1